# EUROPEAN PATENT APPLICATION

(11) **EP 4 645 447 A1**
(43) Date of publication of application: **05.11.2025**
(21) Application number: 23909144.0
(22) Date of filing: 25.07.2023
(51) Int. Cl.: H01M 4/36

(54) **SODIUM BATTERY POSITIVE ELECTRODE MATERIAL AND PREPARATION METHOD THEREFOR, POSITIVE ELECTRODE SHEET AND SODIUM BATTERY**

(30) Priority: 29.12.2022 CN 202211712501
(71) Applicant: BYD Company Limited, Shenzhen, Guangdong 518118 (CN)
(72) Inventor: WANG, Mingxue, Shenzhen, Guangdong 518118 (CN); YIN, Xiaoqiang, Shenzhen, Guangdong 518118 (CN); LI, Xiangyu, Shenzhen, Guangdong 518118 (CN); JIN, Lina, Shenzhen, Guangdong 518118 (CN)
(74) Representative: Mathys & Squire
(86) International application number: PCT/CN2023/109068
(87) International publication number: WO 2024/139201

(57) **Abstract**

Provided are a sodium battery positive electrode material and a preparation method therefor, a positive electrode sheet and a sodium battery. The positive electrode material comprises a core and a coating layer coating the surface of the core. The general molecular formula of the core comprises Na₃V₂₋ₓMₓ(PO₄)₂F₃, wherein M represents a doping element capable of replacing V, element M comprises at least one of Fe, Cr, Mn, Co, Ti, Ni, Cu, Zn, Mo, Nb, Zr, La and Ce, and 0≤x<0.2. The material for the coating layer comprises a carbon material, wherein the I_{D}/I_{G} value of a Raman spectrum of the carbon material is y, and 0.9≤y<1. I_{D}/I_{G} is the peak intensity ratio of peak D to peak G of the Raman spectrum of the carbon material, a Raman shift of peak D ranges from 1300 cm⁻¹to 1360 cm⁻¹, and a Raman shift of peak G ranges from 1580 cm⁻¹to 1600 cm⁻¹.

## Description

### CROSS-REFERENCE TO RELATED APPLICATIONS

The present disclosure claims priority to and benefits of Chinese Patent Application No. 202211712501.3, filed on December 29, 2022 and entitled "SODIUM BATTERY POSITIVE ELECTRODE MATERIAL AND PREPARATION METHOD THEREFORE, POSITIVE ELECTRODE SHEET, AND SODIUM BATTERY". The entire content of the above-referenced application is incorporated herein by reference.

### FIELD

The present disclosure relates to the field of battery technologies, and specifically, to a sodium battery positive electrode material and a preparation method therefore, a positive electrode sheet, and a sodium battery.

### BACKGROUND

NASICON-type materials have three-dimensional ion diffusion channels and high charge and discharge voltages, and therefore are widely used as sodium battery positive electrode materials. Na₃V₂(PO₄)₂F₃ positive electrode materials have more significant advantages. For example, the Na₃V₂(PO₄)₂F₃ positive electrode materials have a higher sodium ion diffusion coefficient (about 7.2×10⁻¹⁰ cm²/s) and high ionic conductivity, and the energy density of the materials can reach 507 Wh/Kg. However, the electronic conductivity of Na₃V₂(PO₄)₂F₃ materials are extremely low (about 10⁻¹² S/cm), severely restricting a Na₃V₂(PO₄)₂F₃ materials' ability to achieve cotransport of electrons and ions at high current density, and affecting full utilization of battery performance of Na₃V₂(PO₄)₂F₃ materials.

Currently, a common method to improve the electronic conductivity of Na₃V₂(PO₄)₂F₃ is to prepare carbon-coated Na₃V₂(PO₄)₂F₃ by using a carbothermic reduction method, but the final carbon coating layer material is generally amorphous carbon, providing limited improvement for the electronic conductivity of the materials.

### SUMMARY

In view of this, the present disclosure provides a sodium battery positive electrode material. A surface of an inner core active component is covered by a carbon material having an I_{D}/I_{G} value in a range of greater than or equal to 0.9 and less than 1, to effectively improve electronic conductivity and cycle performance of the material, thereby providing a battery with both high-rate performance and good long cycle performance.

According to a first aspect of the present disclosure, a sodium battery positive electrode material is provided. The positive electrode material includes a core and a coating layer covering a surface of the core. A general molecular formula of the core includes Na₃V₂₋ₓMₓ(PO₄)₂F₃. M represents a doping element capable of replacing V, M includes at least one of Fe, Cr, Mn, Co, Ti, Ni, Cu, Zn, Mo, Nb, Zr, La and Ce, and 0≤x<0.2. A material for the coating layer includes a carbon material. An I_{D}/I_{G} value of a Raman spectrum of the carbon material is y, and 0.9≤y<1. The I_{D}/I_{G} is a peak intensity ratio of a D peak and a G peak of the Raman spectrum of the carbon material, a Raman shift of the D peak ranges from 1300 cm⁻¹ to 1360 cm⁻¹, and a Raman shift of the G peak ranges from 1580 cm⁻¹ to 1600 cm⁻¹.

In the coating layer, the I_{D}/I_{G} value of the carbon material is in a range of 0.9≤y<1, the electronic conductivity of the coating layer is high, and this type of material covers the surface of the core material, to significantly improve the electronic conductivity of the positive electrode material, thereby improving rate performance of the battery. In addition, a carbon skeleton of the carbon material has good structural stability, to effectively inhibit a structural change of the inner core Na₃V₂₋ₓMₓ(PO₄)₂F₃ during repeated lithium insertion and extraction, thereby significantly improving cycle performance of the positive electrode material.

In some implementations, 0.92≤y≤0.98.

In some implementations, an average particle size of the positive electrode material ranges from 50 nm to 2000 nm. The average particle size is a corresponding particle size when a cumulative quantity percentage of the positive electrode material reaches 50%.

In some implementations, a mass percentage of the carbon material in the positive electrode material ranges from 7% to 15%.

In some implementations, a thickness of the coating layer ranges from 5 nm to 20 nm.

According to a second aspect of the present disclosure, a preparation method for a sodium battery positive electrode material is provided, and the method includes:
a core raw material and a carbon source are mixed, to obtain a precursor material, wherein the carbon source includes an aromatic hydrocarbon-containing substance; and
calcination is performed on the precursor material to obtain the positive electrode material, wherein the positive electrode material includes a core and a coating layer covering a surface of the core; a general molecular formula of the core includes Na₃V₂₋ₓMₓ(PO₄)₂F₃, wherein M represents a doping element capable of replacing V, M includes at least one of Fe, Cr, Mn, Co, Ti, Ni, Cu, Zn, Mo, Nb, Zr, La and Ce, and 0≤x<0.2; and a material for the coating layer includes a carbon material, where an I_{D}/I_{G} value of a Raman spectrum of the carbon material is y, and 0.9≤y<1.

The preparation method is a simple process, having strong controllability, and high production efficiency, so that large-scale industrial production can be realized.

In some implementations, the aromatic hydrocarbon includes a monocyclic aromatic hydrocarbon and a polycyclic aromatic hydrocarbon.

In some implementations, the aromatic hydrocarbon-containing substance includes at least one of sulfonated asphalt, an asphalt phenolate, oxidized asphalt, asphalt resin, and emulsified asphalt.

In some implementations, calcination temperature of the calcination ranges from 600°C to 800°C, and calcination time ranges from 10 min to 480 min.

In some implementations, the calcination includes microwave calcination, and a holding time of the microwave calcination ranges from 10 min to 25 min.

In some implementations, performing calcination on the precursor material includes: calcination is performed on the precursor material under protective gas, where the protective gas may be at least one of nitrogen, argon, and helium.

In some implementations, the method further includes: carbon composite processing is performed on the coating layer, or nanonization processing is performed on the positive electrode material.

In some implementations, an average particle size of the positive electrode material ranges from 50 nm to 2000 nm. The average particle size is a corresponding particle size when a cumulative quantity percentage of the positive electrode material reaches 50%.

In some implementations, a mass percentage of the carbon material in the positive electrode material ranges from 7% to 15%.

According to a third aspect of the present disclosure, a positive electrode sheet is provided. The positive electrode sheet includes the sodium battery positive electrode material provided in the first aspect of the present disclosure or the sodium battery positive electrode material prepared by using the preparation method provided in the second aspect of the present disclosure.

The positive electrode sheet may be used to provide a battery with high-rate performance and good cycle performance.

According to a fourth aspect of the present disclosure, a sodium battery is provided. The sodium battery includes the positive electrode sheet provided in the third aspect of the present disclosure.

The sodium battery has high energy density, high-rate performance, and excellent long cycle capability.

### BRIEF DESCRIPTION OF THE DRAWINGS

FIG. 1 is an x-ray diffraction (x-ray diffraction, XRD) spectrogram of a positive electrode material according to Embodiments 1 to 3 of the present disclosure;
FIG. 2 is a thermo-gravimetric analysis curve of a positive electrode material according to Embodiments 1 to 3 of the present disclosure;
FIG. 3A is a Raman spectrogram of a positive electrode material according to Embodiment 2 of the present disclosure;
FIG. 3B is a Raman spectrogram of a positive electrode material according to Comparative example 2 of the present disclosure;
FIG. 4 shows a scanning electron microscope (scanning electron microscope, SEM) photograph of a positive electrode material according to Embodiment 2 of the present disclosure;
FIG. 5 shows transmission electron microscope (transmission electron microscope, TEM) photographs of a positive electrode material at different magnifications according to Embodiment 2 of the present disclosure;
FIG. 6 is a specific capacity-cycle quantity curve of a battery with a positive electrode material at different rates according to Embodiments 1 to 3 of the present disclosure; and
FIG. 7 is a specific capacity-cycle quantity curve of a battery with a positive electrode material at different rates according to Comparative examples 1 to 3.

### DETAILED DESCRIPTION

An embodiment of the present disclosure provides a sodium battery positive electrode material. The positive electrode material includes a core and a coating layer covering a surface of the core. A general molecular formula of the core includes Na₃V₂₋ₓMₓ(PO₄)₂F₃. M represents a doping element capable of replacing V, M includes at least one of Fe, Cr, Mn, Co, Ti, Ni, Cu, Zn, Mo, Nb, Zr, La and Ce, and 0≤x<0.2. A material for the coating layer includes a carbon material. An I_{D}/I_{G} value of a Raman spectrum of the carbon material is y, and 0.9≤y<1. The I_{D}/I_{G} is a peak intensity ratio of a D peak to a G peak of the Raman spectrum of the carbon material, a Raman shift of the D peak ranges from 1300 cm⁻¹ to 1360 cm⁻¹, and a Raman shift of the G peak ranges from 1580 cm⁻¹ to 1600 cm⁻¹.

It is well-known that a Raman spectrum is one of the most important means to represent a microstructure of a carbon material and a degree of an order of carbon atom arrangement. When excitation light sources of wavelengths of 514 nm, 532 nm, and 633 nm are selected as excitation light sources, a carbon material with orderly arranged carbon atoms shows two characteristic peaks in its Raman spectrum, that is, a D peak and a G peak. A peak position of the D peak is around 1300 cm⁻¹ to 1360 cm⁻¹, representing presence of a defective structure in the carbon material (that is, presence of disordered carbon). A peak position of the G peak is around 1580 cm⁻¹ to 1600 cm⁻¹, representing the presence of sp² hybridized carbons in the carbon material (that is, presence of orderly arranged carbon atoms). A peak intensity ratio I_{D}/I_{G} of the D peak to the G peak may represent a degree of an order of the carbon atom arrangement in the carbon material. In the positive electrode material of the present disclosure, a coating layer material of a core active component includes a carbon material, an I_{D}/I_{G} value of at least a part of the carbon material is in a range of greater than or equal to 0.9 to less than 1, the degree of order of carbon atom arrangement is high, and the electronic conductivity of the carbon material is high, to significantly improve an ability of the material to achieve cotransport of electrons and ions at high current density, and therefore the positive electrode material has high-rate performance. In addition, a carbon skeleton of the carbon material that meets the foregoing I_{D}/I_{G} value limit has good structural stability, to more effectively alleviate a structural change of the core active component during repeated charging, so that a long-cycle stable capability of the positive electrode material is good.

In addition, the M element in the core material replaces the V element in Na₃V₂(PO₄)₂F₃, to effectively improve a specific capacity of the core material and further optimize electrochemical performance of the positive electrode material. x is controlled within a range of less than 0.2, in other words, a doping amount of the M element is controlled within a suitable range, so that electrochemical activity of the positive electrode material can be ensured.

In the present disclosure, for example, the I_{D}/I_{G} value y of the carbon material may be 0.90, 0.91, 0.92, 0.93, 0.94, 0.95, 0.96, 0.97, 0.98, 0.99, 0.995, or the like.

In some implementations of the present disclosure, 0.92≤y≤0.98. In other words, the I_{D}/I_{G} value of the carbon material ranges from 0.92 to 0.98. In a process of preparing the positive electrode material, the degree of order of carbon atom arrangement of the carbon material may be made within the foregoing range by controlling the calcination temperature. In this case, the carbon material has good electronic conductivity, to fully ensure high-rate performance of the positive electrode material. In addition, the coating layer material may have a suitable thickness, and further has a strong capability of inhibiting a change of a core size. Therefore, a particle size of a positive electrode material particle is controlled within a suitable range, so that the material can fully utilize electrochemical performance thereof.

In some implementations of the present disclosure, an average particle size of the positive electrode material ranges from 50 nm to 2000 nm. For example, the average particle size of the positive electrode material may be 50 nm, 60 nm, 70 nm, 80 nm, 90 nm, 100 nm, 200 nm, 300 nm, 500 nm, 1000 nm, 1500 nm, 2000 nm, or the like. The average particle size of the positive electrode material is controlled within the foregoing range, so that it is ensured that a transmission path of sodium ions in the positive electrode material is short during charging and discharging, and rapid insertion and extraction of the sodium ions is facilitated. In addition, this can further control tap density of the positive electrode material to be within a suitable range, and agglomeration is not likely to occur, so that it is ensured that final high energy density of the battery is high. The foregoing average particle size specifically refers to an average particle size of primary particles of the positive electrode material. In some cases, multiple primary particles may aggregate to form a secondary particle.

In the present disclosure, the foregoing average particle size refers to a D50 particle size of the positive electrode material, to be specific, a corresponding particle size when a cumulative quantity percentage of the positive electrode material reaches 50%. The foregoing D50 particle size may be obtained by observing a particle size condition (where a quantity of positive electrode material particles in a sampled object is generally 500 or more, preferably 1000 or more) of the positive electrode material through a scanning electron microscope (scanning electron microscopy, SEM), to determine the corresponding size when the cumulative quantity percentage of the positive electrode material particles reaches 50%.

In some implementations of the present disclosure, in the foregoing positive electrode material, the thickness of the coating layer ranges from 5 nm to 20 nm. For example, the thickness of the coating layer may be 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, or the like. In this case, this can effectively improve the electronic conductivity of the positive electrode material, effectively alleviate the structural change (or structural collapse) of the core material during repeated charging and discharging, and will not affect a proportion of the core material in the positive electrode material, in other words, will not affect utilization of the electrochemical performance of the positive electrode material. In addition, the thickness of the coating layer is within the suitable range, so that occurrence of particle agglomeration may be sufficiently reduced, to facilitate utilization of the electrochemical performance of the positive electrode material.

In some implementations of the present disclosure, in the foregoing positive electrode material, a mass percentage of the carbon material in the positive electrode material ranges from 7% to 15%. For example, the mass percentage of the carbon material in the positive electrode material may be 7%, 8%, 9%, 10%, 11%, 12%, 13%, 14%, 14.5%, 15%, or the like. The mass percentage of the carbon material is controlled to be within the foregoing range, to facilitate improvement of conductivity of the positive electrode material, and a good ability of achieving cotransport of electrons and ions at high current density can be ensured. In addition, a proportion of the core active material is not occupied, thereby ensuring that the positive electrode material still has a high specific capacity. It will be understood that, the mass percentage of the carbon material within the foregoing range is also beneficial to controlling the thickness of the coating layer of the positive electrode material to be suitable, so that a transmission distance of an ion inside the particles of the positive electrode material is short, and the particles are not prone to agglomeration. Specifically, the mass percentage of the carbon material may be represented by using a thermo-gravimetric analyzer.

In some specific embodiments of the present disclosure, the mass percentage of the carbon material ranges from 10% to 14%. Correspondingly, the thickness of the coating layer ranges from 14 nm to 18 nm. In this case, the coating layer can provide enough free ions, to maintain the electronic conductivity of the material at an optimal level without affecting crystallinity of the core material. The crystallinity and a crystal structure of the core material can still remain in a good state, leading to a good specific capacity and good overall performance of the material.

An embodiment of the present disclosure provides a preparation method for a sodium battery positive electrode material, and the method includes the following steps.
(1) A core raw material and a carbon source are mixed, to obtain a precursor material, where the carbon source includes an aromatic hydrocarbon-containing substance.
(2) Calcination is performed on the precursor material to obtain the positive electrode material, where the positive electrode material includes a core and a coating layer covering a surface of the core; a general molecular formula of the core includes Nₐ₃V₂₋ₓMₓ(PO₄)₂F₃, wherein M represents a doping element capable of replacing V, M includes at least one of Fe, Cr, Mn, Co, Ti, Ni, Cu, Zn, Mo, Nb, Zr, La and Ce, and 0≤x<0.2; and a material for the coating layer includes a carbon material, wherein an I_{D}/I_{G} value of a Raman spectrum of at least a part of the carbon material is y, and 0.9≤y<1, wherein the I_{D}/I_{G} is a peak intensity ratio of a D peak to a G peak of the Raman spectrum of the carbon material, a Raman shift of the D peak ranges from 1300 cm⁻¹ to 1360 cm⁻¹, and a Raman shift of the G peak ranges from 1580 cm⁻¹ to 1600 cm⁻¹.

The foregoing aromatic hydrocarbon-containing substance is used as a carbon source to in-situ generate a coating layer with a high degree of order of atom arrangement and good skeleton structure stability on an outer surface of a newly formed core material Na₃V₂₋ₓMₓ(PO₄)₂F₃ or an outer surface of the existing core material during a calcination process. The temperature at which the atoms are arranged in an orderly manner coincides, by using the foregoing carbon source, with the temperature at which the core raw material Na₃V₂₋ₓMₓ(PO₄)₂F₃ is synthesized. A high reaction degree of each element source and fewer crystal defects of the generated Na₃V₂₋ₓMₓ(PO₄)₂F₃ can be ensured, and there is no problem of decomposition of the core material (including a newly generated core and the existing core material during the calcination process) caused by high-temperature calcination. Therefore, the prepared sodium battery positive electrode material with a core-shell structure has good electronic conductivity and strong long-cycle stable operation capability. The foregoing preparation method is simple to operate, has strong process controllability and high production efficiency, and is suitable for large-scale industrial production.

In the present disclosure, the foregoing carbon source includes at least one aromatic hydrocarbon. The aromatic hydrocarbon may be a monocyclic aromatic hydrocarbon or a polycyclic aromatic hydrocarbon. The polycyclic aromatic hydrocarbon refers to a substance including two or more aromatic rings, for example, may be a biphenyl compound or a condensed ring compound.

In some implementations of the present disclosure, the core raw material may be a core material of Na₃V₂₋ₓMₓ(PO₄)₂F₃. In some other implementations, the core raw material may be various element sources of Na₃V₂₋ₓMₓ(PO₄)₂F₃ (specifically a sodium source, a vanadium source, a phosphorus source, a fluorine source, and an optional M source). In the present disclosure, considering a loss of alkali metal elements such as sodium and fluorine during a preparation process, each sodium source, fluorine source, and the like may be used in excess as appropriate. For example, the sodium source may be prepared in an excess of 10 wt.%.

In some implementations of the present disclosure, the carbon source includes a mixture of a monocyclic aromatic hydrocarbon and a polycyclic aromatic hydrocarbon. In other words, the foregoing aromatic hydrocarbon-containing substance is preferably a material rich in both the monocyclic aromatic hydrocarbon and the polycyclic aromatic hydrocarbon. In some specific embodiments, the foregoing aromatic hydrocarbon-containing substance may be a byproduct by refining petroleum, coal, and the like, for example, at least one of sulfonated asphalt, an asphalt phenolate, oxidized asphalt, asphalt resin, and emulsified asphalt; or may be a substance rich in a monocyclic aromatic hydrocarbon and a polycyclic aromatic hydrocarbon produced by coking or incomplete combustion of coal and biomass, for example, tar and coke In some cases, the foregoing aromatic hydrocarbon-containing substance may be sulfonated asphalt, which is a powder obtained by sulfonating asphalt that is a high-viscosity liquid. The sulfonated asphalt is not only rich in the monocyclic aromatic hydrocarbon and the polycyclic aromatic hydrocarbon, and by using the sulfonated asphalt, it is easy to prepare a carbon material that has a high degree of order of carbon atom arrangement and that can uniformly cover the surface of the foregoing core material. Moreover, a raw material source of the sulfonated asphalt is extensive and a price is low, and is greatly beneficial to reducing raw material costs of the positive electrode material.

In some implementations of the present disclosure, based on a Na element in the core raw material, when the foregoing aromatic hydrocarbon-containing substance is the sulfonated asphalt, a ratio of a mass of the sulfonated asphalt to a mass of the sodium source in the core raw material is in a range of (1-1.67):(2.46-7.33). When the foregoing aromatic hydrocarbon-containing substance is the asphalt phenolate, a ratio of a mass of the asphalt phenolate to a mass of the sodium source in the core raw material is in a range of (1-1.67):(3.51-10.43). When the foregoing aromatic hydrocarbon-containing substance is the oxidized asphalt, a ratio of a mass of the oxidized asphalt to a mass of the sodium source in the core raw material is in a range of (1-1.67):(3.73-11.11). When the foregoing aromatic hydrocarbon-containing substance is the asphalt resin, a ratio of a mass of the asphalt resin to a mass of the sodium source in the core raw material is in a range of (1-1.67):(3.31-9.84). When the foregoing aromatic hydrocarbon-containing substance is the emulsified asphalt, a ratio of a mass of the emulsified asphalt to a mass of the sodium source in the core raw material is in a range of (1-1.67):(3.17-9.44).

In the present disclosure, in operation (2), the calcination process is carried out under protective gas. The protective gas may be nitrogen, argon, helium, or the like.

In some implementations of the present disclosure, in operation (1), a method of mixing the sodium source, vanadium source, M source, phosphorus source, fluorine source, and carbon source includes but is not limited to a solid phase mixing method or a sol-gel method.

A specific operation of using the solid phase mixing method may be: the foregoing sodium source, vanadium source, M source, phosphorus source, fluorine source, and carbon source are added into a ball milling apparatus to be mixed to obtain the precursor material. For example, the foregoing ball milling apparatus may be a planetary ball mill apparatus. Specifically, a specific amount of the foregoing sodium source, vanadium source, M source, phosphorus source, fluorine source, and carbon source might be weighed, dispersed in acetone, fully stirred and then transferred to a ceramic ball mill, and then the ceramic ball mill is placed in the planetary ball mill for ball milling at a speed of 400 r/min to 800 r/min for 4h to 10h. Subsequently, the ceramic ball mill is placed in a vacuum drying oven and dried at 50°C to 80°C for 1h to 5h to remove the foregoing acetone, and the precursor material is obtained after grinding.

A specific operation of the sol-gel method may be: The foregoing sodium source, vanadium source, M source, phosphorus source, fluorine source, and carbon source are added into a solvent, and the mixture is heated to 60°C to 85°C, stirred thoroughly to generate a gel through reaction, and continually heated and stirred to evaporate the solvent in the obtained gel to obtain the foregoing precursor material.

In the present disclosure, the foregoing solvent is a volatile solvent, and may be specifically one or more of water, ethanol, ethylene glycol, and acetone.

In the present disclosure, the foregoing sodium source may be at least one of sodium fluoride, sodium acetate, sodium formate, sodium carbonate, sodium nitrate, sodium oxalate, sodium sulfate, sodium citrate, and sodium acetylacetonate.

In the present disclosure, the foregoing vanadium source includes but is not limited to at least one of vanadium sources in which a vanadium element is trivalent, tetravalent, or pentavalent in a compound. For example, the foregoing vanadium source may be at least one of vanadium pentoxide, vanadium tetroxide, vanadium trioxide, ammonium metavanadate, sodium metavanadate, vanadyl sulfate, vanadium acetylacetonate, and vanadyl acetylacetonate. When a tetravalent or pentavalent vanadium source is used, the foregoing carbon source may alternatively serve as a reducing agent to reduce a high-valent V element to V³⁺.

In the present disclosure, the foregoing M source is a compound familiar to a person skilled in the art, for example, at least one of an organic metal salt, a metal acid salt, or metal oxide of a specific element corresponding to the M element. For example, when the M element is a Ti, the M source may be at least one of tetrabutyl titanate, isopropyl titanate, tetraethyl titanate, and the like. When the M element is Zr, the M source may be at least one of zirconium oxynitrate, zirconium acetate, zirconium acetylacetonate, zirconium oxychloride, and the like.

In the present disclosure, the phosphorus source may be at least one of phosphoric acid, sodium phosphate, sodium dihydrogen phosphate, disodium hydrogen phosphate, ammonium dihydrogen phosphate, diammonium hydrogen phosphate, and ammonium phosphate.

In the present disclosure, the fluorine source may be at least one of sodium fluoride, ammonium fluoride, hydrofluoric acid, and sodium bifluoride.

In some implementations of the present disclosure, in operation (2), during the calcination process, calcination temperature ranges from 600°C to 800°C, and calcination time ranges from 10 min to 480 min.

The foregoing calcination method may be microwave calcination. When the microwave calcination is used, a holding time ranges from 10 min to 25 min. For example, the holding time may be 10 min, 15 min, 20 min, 25 min, or the like. In some specific embodiments of the present disclosure, power of a microwave calcination device ranges from 800 W to 1500 W. The microwave calcination device may be a microwave tube furnace. Microwave calcination time is short, so that the carbon source can be quickly rearranged and cover the surface of the core active component to form the uniform coating layer, and a large loss of the fluorine element during excessively long calcination holding time can be avoided.

In some implementations of the present disclosure, carbon composite processing may be performed on the coating layer or nanonization processing may be performed on the positive electrode material to further improve electrochemical performance of the material. The carbon composite processing means that a carbon source such as citric acid and oxalic acid that may form amorphous carbon may be added to the precursor material for calcination.

An embodiment of the present disclosure further provides a positive electrode sheet, including the sodium battery positive electrode material provided in embodiments of the present disclosure or the sodium battery positive electrode material prepared by using the preparation method of embodiments of the present disclosure. The positive electrode sheet may be used to provide a battery with high-rate performance and good cycle performance.

In the present disclosure, the foregoing positive electrode sheet includes a positive electrode current collector and a positive electrode active material layer arranged on at least one side surface of the positive electrode current collector. The positive electrode active material includes the foregoing sodium battery positive electrode material, a binder, and an optional conductive agent.

The binder and the conductive agent may be conventional choices in the battery field. The positive electrode current collector may be any material suitable for use as a current collector for a positive electrode sheet, including but not limited to elementary metal foil, alloy foil, a metal-plated polymer film, or the foregoing material with carbon covering the surface. The elementary metal foil may be specifically aluminum foil, the alloy foil may be aluminum alloy foil, and the metal plated on the surface of the polymer film may be an aluminum elemental layer or an aluminum alloy layer.

An embodiment of the present disclosure further provides a sodium battery, including the positive electrode sheet provided in embodiments of the present disclosure. Because having the foregoing positive electrode material as the positive electrode active material, the sodium battery has high energy density, excellent rate performance, and strong long-cycle operation capability. The sodium battery may be used in a 3C electronic product (such as a mobile phone and a tablet computer), a transportation vehicle (such as a car and a ship), or another electrical device to improve performance and market competitiveness of the electrical device.

The sodium battery may be a liquid battery using a liquid electrolyte, or a semi-solid battery using a semi-solid electrolyte, or a solid battery using a solid electrolyte. In some implementations, a secondary battery may include the foregoing positive electrode sheet, a negative electrode plate, and a separator and an electrolyte disposed between the positive electrode sheet and the negative electrode plate. In some other implementations, the sodium battery may include a positive electrode sheet, a negative electrode plate, and a semi-solid electrolyte or a solid electrolyte disposed between the positive electrode sheet and the negative electrode plate. In addition, when the semi-solid electrolyte or the solid electrolyte is used, the positive electrode sheet and the negative electrode plate may also include a semi-solid electrolyte material or a solid electrolyte material.

The technical solutions of the present disclosure are further described in detail below with multiple embodiments.

### Embodiment 1

(1) A specific amount of sodium source, fluorine source (specifically NaF), vanadium source (specifically NH₄VO₃), and phosphorus source (specifically NH₄H₂PO₄) are taken, to enable a molar ratio of sodium, vanadium, phosphorus, and fluorine to be 3:2:2:3. 66.7 g of carbon source (specifically sulfonated asphalt) is weighed per 1 mol of Na₃V₂(PO₄)₂F₃ synthesized, and the foregoing raw materials are dispersed in acetone solvent, thoroughly stirred, and then transferred to a ceramic ball mill. The ceramic ball mill is placed in a planetary ball mil for ball milling at a speed of 500 r/min for 6h. The ceramic ball mill is placed in a vacuum drying oven and dried at 60°C for 3h to remove the foregoing acetone, and the precursor material is obtained after grinding.
(2) After the foregoing precursor material is placed in a porcelain boat, the porcelain boat is transferred to a microwave tube furnace, heated to the holding temperature of 700°C under a flowing argon atmosphere, kept at 700°C for 15 min, cooled, and then ground to obtain the positive electrode material Na₃V(PO₄)₂F₃@C. A thickness of a coating layer of the positive electrode material is 16.0 nm, and an average particle size of the positive electrode material is 1000 nm.

### Embodiment 2

A difference from Embodiment 1 only lies in: In operation (1), a mass of sulfonated asphalt weighed per 1 mol of Na₃V₂(PO₄)₂F₃ synthesized is 50 g. A thickness of the coating layer of the positive electrode material is 11.2 nm, and an average particle size of the positive electrode material is 1500 nm.

### Embodiment 3

A difference from Embodiment 1 only lies in: In operation (1), a mass of sulfonated asphalt added per 1 mol of Na₃V₂(PO₄)₂F₃ synthesized is 83.3 g. A thickness of the coating layer of the positive electrode material is 20.4 nm, and an average particle size of the positive electrode material is 400 nm.

### Embodiment 4

A difference from Embodiment 1 only lies in: In operation (2), the holding temperature is 650°C. A thickness of the coating layer of the positive electrode material is 18.1 nm, and an average particle size of the positive electrode material is 800 nm.

### Embodiment 5

A difference from Embodiment 1 only lies in: In operation (2), the holding temperature is 750°C. A thickness of the coating layer of the positive electrode material is 13.3 nm, and an average particle size of the positive electrode material is 1500 nm.

### Embodiment 6

A difference from Embodiment 1 only lies in: In operation (2), the holding temperature is 900°C, and the holding time is 30 min. A thickness of the coating layer of the positive electrode material is 7.5 nm, and an average particle size of the positive electrode material is 2800 nm.

### Embodiment 7

A difference from Embodiment 1 only lies in: In operation (1), a specific amount of sodium source and fluorine source (specifically NaF), vanadium source (specifically NH₄VO₃), M source (specifically zirconium oxynitrate), and phosphorus source (specifically NH₄H₂PO₄) are taken to enable a molar ratio of sodium, vanadium, an M element, phosphorus, and fluorine to be 3:1.95:0.05:2:3; and 66.7 g of carbon source (specifically sulfonated asphalt) is weighed as a raw material per 1 mol of Na₃V_{1.95}Zro_{0.05}(PO₄)₂F₃ synthesized, to obtain the positive electrode material Na₃V_{1.95}Zr_{0.05}(PO₄)₂F₃@C. A thickness of the coating layer of the positive electrode material is 16.1 nm, and an average particle size of the positive electrode material is 1100 nm.

### Embodiment 8

A difference from Embodiment 1 only lies in: In operation (2), process parameters are fine-tuned, the holding temperature is 600°C, the holding time is 15 min, and an average particle size of the positive electrode material is 710 nm.

To highlight the beneficial effects of embodiments of the present disclosure, the following comparative examples are provided.

### Comparative example 1

A difference from Embodiment 1 only lies in: In operation (2), the holding temperature is 500°C, and the holding time is 10 min. A thickness of the coating layer of the positive electrode material finally prepared is 24.7 nm, an I_{D}/I_{G} value of a coating layer carbon material is 1.0, and an average particle size of the positive electrode material is 500 nm.

### Comparative example 2

A difference from Embodiment 1 only lies in: The carbon source added per 1 mol of Na₃V₂(PO₄)₂F₃ synthesized is 1.6 mol of citric acid. A thickness of the coating layer of the positive electrode material is 4.5 nm, and an average particle size of the positive electrode material is 580 nm.

### Comparative example 3

A difference from Embodiment 1 only lies in: The carbon source added per 1 mol of Na₃V₂(PO₄)₂F₃ synthesized is 1.9 mol of citric acid. A thickness of the coating layer of the positive electrode material is 7.0 nm, and an average particle size of the positive electrode material is 420 nm.

### Comparative example 4

A difference from Embodiment 1 only lies in: The carbon source added per 1 mol of Na₃V₂(PO₄)₂F₃ synthesized is 2.2 mol of citric acid. A thickness of the coating layer of the positive electrode material is 9.0 nm, and an average particle size of the positive electrode material is 300 nm.

### Comparative example 5

A difference from Embodiment 1 only lies in: In operation (2), the holding temperature is 900°C, and the holding time is 40 min. An I_{D}/I_{G} value of a carbon material for the coating layer of the positive electrode material finally prepared is 0.87, and an average particle size of the positive electrode material is 3000 nm.

### Performance test

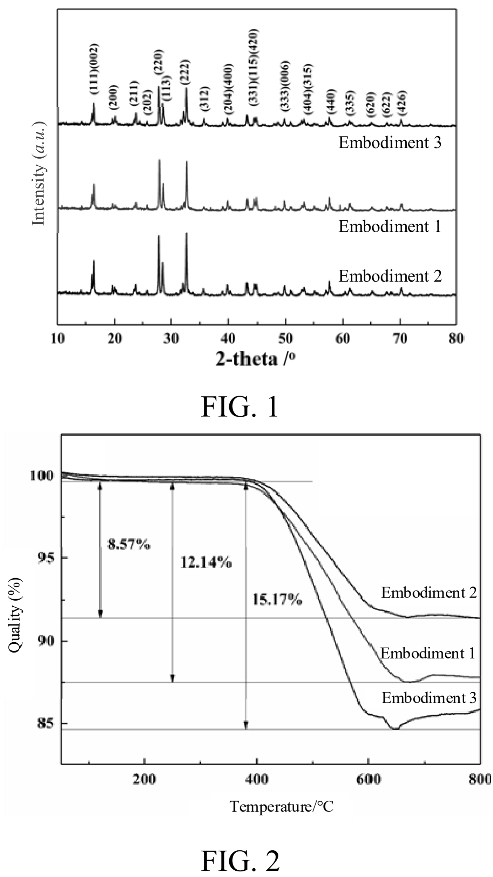

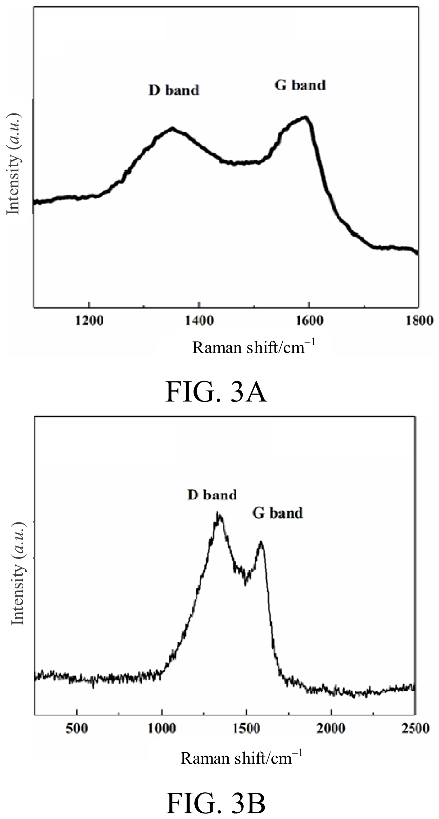

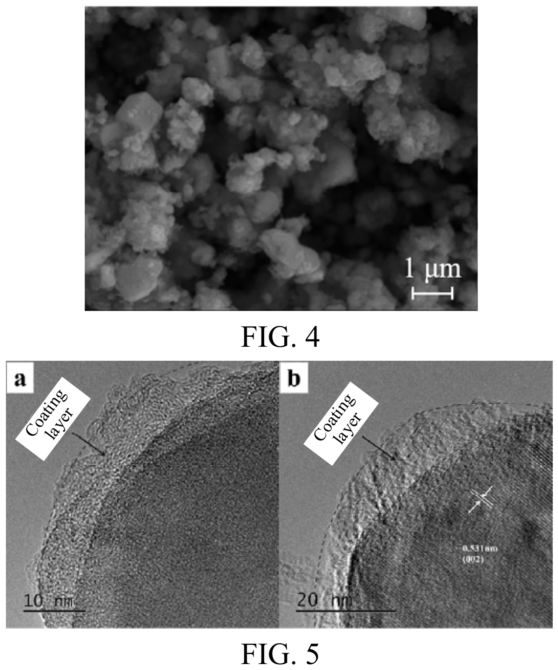

(1) An XRD test is performed on the positive electrode material prepared in Embodiments 1 to 3, and results are summarized in FIG. 1.
(2) Thermo-gravimetric analysis (thermo-gravimetric analysis, TG) tests are performed on the positive electrode materials prepared in the embodiment and the comparative example. Specifically, 8 mg of a sample is taken and the thermo-gravimetric analysis test is performed on the sample at a heating rate of 5°C/min in an air or an oxygen atmosphere (where all samples are tested in the oxygen atmosphere, or all samples are tested in the air atmosphere) to determine carbon material content in the positive electrode material. TG curves of some test samples are summarized in FIG. 2.
(3) SEM tests are performed on positive electrode materials prepared in some embodiments. A SEM photograph of the positive electrode material prepared in Embodiment 2 is shown in FIG. 4.
(4) TEM tests are performed on positive electrode materials prepared in some embodiments. Section a and section b in FIG. 5 are respectively TEM photographs of the positive electrode material prepared in Embodiment 2 at two different magnifications.
(5) Raman spectrum tests are performed on the positive electrode materials of the embodiment and the comparative example. A wavelength of a Raman spectrum excitation light source is 514 nm, and resolution is 2 cm⁻¹. A Raman spectrogram of Embodiment 2 is shown in FIG. 3A, and a Raman spectrogram of Comparative example 2 is shown in FIG. 3B.
(6) Electrochemical performance test
   (a) The positive electrode materials, conductive agent-carbon black, and LA-132 binder provided in the foregoing embodiments and comparative examples are added into solvent-deionized water at a mass ratio of 8:1:1, and then stirred in a vacuum mixer to form stable and uniform positive electrode slurry. The positive electrode slurry is coated on current collector-aluminum foil, and dried at 105°C for 6h to obtain the positive electrode sheet.
   (b) A metal sodium plate with suitable size is cut as a negative electrode plate.
   (c) 1 mol of sodium salt-NaClO₄ is dissolved in 1 L of an organic solvent (where a volume ratio of ethylene carbonate, diethyl carbonate, and ethyl methyl carbonate is 1:1:1) and 2 wt.% of fluoroethylene carbonate is added to obtain an electrolyte;
   (d) In a glove box, under an Ar atmosphere, the positive electrode sheet, a separator-glass fiber separator, and the negative electrode plate prepared in operation (2) are alternately stacked, and the electrolyte is injected to prepare a CR2032 button-type battery.
   (e) After assembled, the foregoing button-type batteries are made to stand at 25°C for 12h and tested on a Land-2001A battery testing system.

Cycle performance test: A charge-discharge cycle test is performed on each battery at 25°C with a current rate of 5 C. A voltage ranged from 2.0 V to 4.5 V. A first-cycle discharge specific capacity of each battery and a capacity retention rate after 500 cycles are recorded. The first-cycle discharge specific capacity is equal to a ratio of a first-cycle discharge capacity of each button-type battery to a mass of a positive electrode material in the battery. The capacity retention rate after 500 cycles is equal to a ratio of a discharge capacity after 500 cycles to the first-cycle discharge capacity. Related results are summarized in table1.

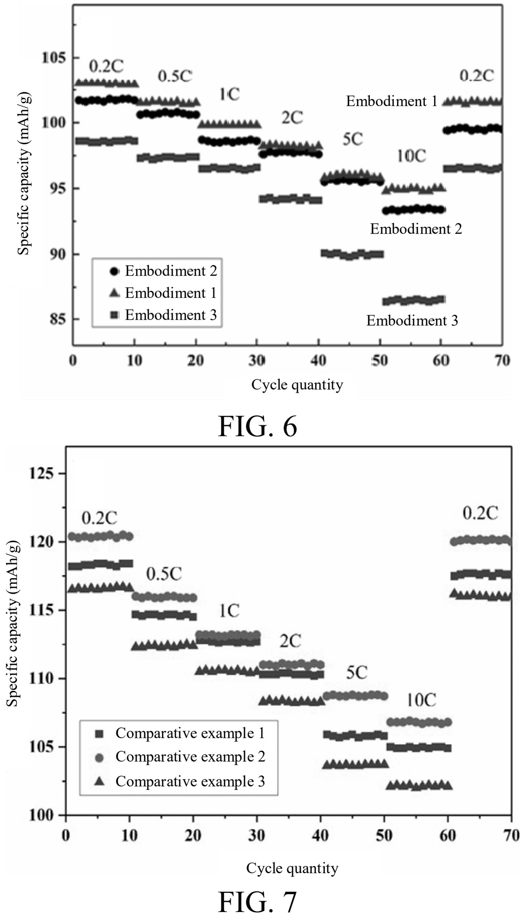

Rate performance: Changes of discharge capacities of each battery with a quantity of cycles are tested at 25°C at different rates of 0.2 C, 0.5 C, 1 C, 2 C, 5 C, and 10 C. A voltage ranged from 2 V to 4.5 V. Rate performance curves of some embodiments and comparative examples are shown in FIG. 6 and FIG. 7. Ratios of first-cycle discharge capacities at the rate of 10 C to first-cycle discharge specific capacities at the rate of 0.2 C are summarized in Table 1.

**Table 1 Summary of test parameters of positive electrode materials in embodiments and comparative examples**

| Experiment number | Carbon material content (wt.%) | I_{D}/I_{G} value | Positive electrode material Average particle size (nm) | Battery capacity after 500 cycles at 5 C Retention rate | Ratio of a first-cycle discharge specific capacity at 10 C to that at 0.2 C |
|---|---|---|---|---|---|
| Embodiment 1 | 12.14 | 0.97 | 1000 | 91.9% | 92.2% |
| Embodiment 2 | 8.57 | 0.97 | 1500 | 90.1% | 91.8% |
| Embodiment 3 | 15.17 | 0.97 | 400 | 88.1% | 89.2% |
| Embodiment 4 | 13.54 | 0.98 | 800 | 89.1% | 89.0% |
| Embodiment 5 | 11.07 | 0.95 | 1500 | 88.7% | 88.9% |
| Embodiment 6 | 9.81 | 0.90 | 2800 | 87.7% | 88.1% |
| Embodiment 7 | 12.20 | 0.97 | 1100 | 95.7% | 93.8% |
| Embodiment 8 | 13.81 | 0.99 | 710 | 88.9% | 88.8% |
| Comparative example 1 | 14.97 | 1.00 | 500 | 87.4% | 87.9% |
| Comparative example 2 | 8.72 | 1.09 | 580 | 86.8% | 87.2% |
| Comparative example 3 | 9.62 | 1.09 | 420 | 87.2% | 87.7% |
| Comparative example 4 | 10.58 | 1.09 | 300 | 85.6% | 86.2% |
| Comparative example 5 | 9.54 | 0.87 | 3000 | 87.5% | 82.7% |

FIG. 1 is an XRD spectrogram of the positive electrode materials of Embodiments 1 to 3. Characteristic peaks in the spectrogram belong to the core material Na₃V₂(PO₄)₂F₃. From a (002) crystal plane, it can be understood that crystallinity of the core material of each embodiment is maintained at a high level. Correspondingly, in FIG. 5, lattice fringes with a spacing of about 0.531 nm correspond to the (002) crystal plane, and a lattice has a high degree of order, indicating that the core material is well crystallized.

It can be understood from the data in Table 1 that when carbon material content of positive electrode materials is similar, I_{D}/I_{G} values of coating layer carbon materials are different, and electrochemical performance of the positive electrode materials is more comparable. It can be understood from Table 1 that a capacity retention rate and rate performance of a positive electrode material of an embodiment with carbon material content similar to that of a corresponding comparative example are significantly better than those of the corresponding comparative example. When calcination temperature is further increased to 900°C, an I_{D}/I_{G} value of a final coating layer carbon material drops to 0.87 (Comparative example 5), and rate performance of a positive electrode material is significantly deteriorated, especially worse than that of Embodiment 6 with carbon content similar to that of Comparative example 5. Cycle performance of Comparative example 5 is also weaker than that of the embodiment. It can be understood that an excessively small I_{D}/I_{G} value of the coating layer carbon material is not conducive to the final battery performance.

The foregoing descriptions are merely example implementations of the present disclosure. A person of ordinary skill in the art may further make various improvements and modifications without departing from the principle of the present disclosure, and the improvements and modifications are also considered as the protection scope of the present disclosure.

## Claims

1. A sodium battery positive electrode material, comprising a core and a coating layer covering a surface of the core; a general molecular formula of the core comprising Na₃V₂₋ₓMₓ(PO₄)₂F₃, wherein M represents a doping element that can replace V, M comprises at least one of Fe, Cr, Mn, Co, Ti, Ni, Cu, Zn, Mo, Nb, Zr, La and Ce, and 0≤x<0.2; and a material for the coating layer comprising a carbon material, wherein an I_{D}/I_{G} value of a Raman spectrum of the carbon material is y, and 0.9≤y<1, wherein the I_{D}/I_{G} is a peak intensity ratio of a D peak to a G peak of the Raman spectrum of the carbon material, a Raman shift of the D peak ranges from 1300 cm⁻¹ to 1360 cm⁻¹, and a Raman shift of the G peak ranges from 1580 cm⁻¹ to 1600 cm⁻¹.

2. The positive electrode material according to claim 1, wherein 0.92≤y≤0.98.

3. The positive electrode material according to claim 1 or 2, wherein an average particle size of the positive electrode material ranges from 50 nm to 2000 nm, and the average particle size is a corresponding particle size when a cumulative quantity percentage of the positive electrode material reaches 50%.

4. The positive electrode material according to any one of claims 1 to 3, wherein a mass percentage of the carbon material in the positive electrode material ranges from 7% to 15%.

5. The positive electrode material according to any one of claims 1 to 4, wherein a thickness of the coating layer ranges from 5 nm to 20 nm.

6. A preparation method for a sodium battery positive electrode material, comprising:
mixing a core raw material and a carbon source, to obtain a precursor material, wherein the carbon source comprises an aromatic hydrocarbon-containing substance; and
performing calcination on the precursor material to obtain the positive electrode material, wherein the positive electrode material comprises a core and a coating layer covering a surface of the core; a general molecular formula of the core comprises Na₃V₂₋ₓMₓ(PO₄)₂F₃, wherein M represents a doping element that can replace V, M comprises at least one of Fe, Cr, Mn, Co, Ti, Ni, Cu, Zn, Mo, Nb, Zr, La and Ce, and 0≤x<0.2; and a material for the coating layer comprises a carbon material, wherein an I_{D}/I_{G} value of a Raman spectrum of the carbon material is y, and 0.9≤y<1.

7. The preparation method according to claim 6, wherein the aromatic hydrocarbon comprises a monocyclic aromatic hydrocarbon and a polycyclic aromatic hydrocarbon.

8. The preparation method according to claim 6 or 7, wherein the aromatic hydrocarbon-containing substance comprises at least one of sulfonated asphalt, an asphalt phenolate, oxidized asphalt, asphalt resin, and emulsified asphalt.

9. The preparation method according to any one of claims 6 to 8, wherein calcination temperature of the calcination ranges from 600°C to 800°C, and calcination time ranges from 10 min to 480 min.

10. The preparation method according to claim 9, wherein the calcination comprises microwave calcination, and a holding time of the microwave calcination ranges from 10 min to 25 min.

11. The preparation method according to any one of claims 6 to 10, wherein performing calcination on the precursor material comprises:
performing calcination on the precursor material under protective gas, wherein the protective gas may be at least one of nitrogen, argon, and helium.

12. The preparation method according to any one of claims 6 to 11, further comprising:
performing carbon composite processing on the coating layer, or performing nanonization processing on the positive electrode material.

13. The preparation method according to any one of claims 6 to 12, wherein an average particle size of the positive electrode material ranges from 50 nm to 2000 nm, and the average particle size is a corresponding particle size when a cumulative quantity percentage of the positive electrode material reaches 50%.

14. The preparation method according to any one of claims 6 to 13, wherein a mass percentage of the carbon material in the positive electrode material ranges from 7% to 15%.

15. A positive electrode sheet, comprising the sodium battery positive electrode material according to any one of claims 1 to 5 or the sodium battery positive electrode material prepared by using the preparation method according to any one of claims 6 to 14.

16. A sodium battery, comprising the positive electrode sheet according to claim 15.
